# FASCICULE DE BREVET EUROPEEN

(11) **EP 1 866 597 B1**
(45) Date de publication et mention de la délivrance du brevet: **05.03.2014**
(21) Numéro de dépôt: 06725665.1
(22) Date de dépôt: 07.04.2006
(51) Int. Cl.: G01C 11/02

(54) **SYSTEME DE DESIGNATION ET/OU D'ILLUMINATION DE CIBLE ET DE RECONNAISSANCE AERIENNE**
SYSTEM ZUR ZIELBESTIMMUNG UND/ODER -BELEUCHTUNG UND FÜR DIE LUFTAUFKLÄRUNG
SYSTEM FOR TARGET DESIGNATION AND/OR ILLUMINATION AND FOR AIR RECONNAISSANCE

(30) Priorité: 08.04.2005 FR 0503533
(43) Date de publication de la demande: 19.12.2007
(73) Titulaire: THALES, 92200 Neuilly sur Seine (FR)
(72) Inventeur: LARROQUE, Serge, F-78610 Saint-leger En Yvelines (FR); UNTERREINER, Patrick, F-91440 Bures Sur Yvette (FR); VERDY, Olivier, F-78990 Elancourt (FR)
(74) Mandataire: Henriot, Marie-Pierre
(86) Numéro de dépôt international: PCT/EP2006/061464
(87) Numéro de publication internationale: WO 2006/106150

(56) Documents cités:
- WO-A-03/102505
- US-A- 5 077 609
- US-A- 5 481 479
- US-A1- 2001 015 755
- US-A1- 2002 149 674
- US-B1- 6 256 057

## Description

Le domaine de l'invention est celui de la désignation et/ou de l'illumination de cible (« targeting » en anglais) et de la reconnaissance aérienne.

Actuellement la désignation et/ou l'illumination de cible et la reconnaissance aérienne sont assurées par des équipements optroniques distincts. Ces équipements optroniques sont par exemple des nacelles (ou « Pods » en anglais) fixées à un aéronef.

Il existe des « pods » de reconnaissance et des « pods » de désignation et/ou d'illumination de cibles. Les « pods » de désignation et/ou d'illumination de cibles sont moins volumineux et moins lourds que les pods de reconnaissance.

Les autres différences entre ces familles de « pods » résident dans le fait que les « pods » de désignation et/ou illumination :
- comprennent un ou plusieurs laser permettant de réaliser une ou plusieurs des fonctions suivantes :
   - télémétrie, éventuellement à sécurité oculaire, de cible(s) dans le champ
   - marquage de cible(s) par laser pour le compte d'un autre opérateur terrestre ou aérien
   - illumination laser pour le compte d'un ou plusieurs armements guidés laser (guidés par exemple selon les principes du STANAG 3733)
- et qu'ils sont souvent capables d'être orientés à l'intérieur d'un domaine adressable important allant typiquement du demi-espace avant de l'avion à des angles vers l'arrière compatibles de manoeuvres avion telles que des « break » ou « hippodromes » (par exemple champ adressable vers l'arrière au-delà de 110° de l'axe avion ou nacelle).

Les documents US 6 256 057, US 2002/014674 et US 2001/0015755, décrivent un système de reconnaissance opto-électronique avec compensation du déplacement vers l'avant pour éviter d'obtenir une image floue. Le détecteur à plan focale, par exemple un CCD, est con£çu pour transférer et ajouter l'image de pixel en pixel à une vitesse correspondant à celle du déplacement à compenser.

Dans le cadre de missions opérationnelles, la reconnaissance aérienne est assurée par un pod de reconnaissance fixé sur un premier aéronef qui réalise une prise de vue d'une zone déterminée. Les images sont transmises à une station qui les analyse. En cas de présence d'une cible, les informations relatives à cette cible sont transmises au pod de désignation et /ou d'illumination de cible fixé sur un autre aéronef qui reçoit l'ordre de décoller.

Actuellement, le temps entre la reconnaissance d'une zone et l'illumination d'une cible (« Sensor to shooter loop » en anglais) est d'environ 180 minutes, ce qui pose un problème opérationnel notamment dans le cas de cibles pouvant être déplacées rapidement.

De plus, les deux fonctions sont assurées au moyen de deux aéronefs.

Les deux pods peuvent éventuellement être fixés sur le même aéronef, ce qui pose alors des problèmes d'encombrement, de poids, ou de capacité d'emport de charges.

Mais dans un cas comme dans l'autre, deux pods sont utilisés, ce qui est coûteux.

Un but important de l'invention est donc de pouvoir assurer ces deux fonctions plus rapidement et plus économiquement.

Pour atteindre ce but, l'invention propose un système de désignation et/ou d'illumination d'une cible dans une scène, selon la revendication 1.

Le système selon l'invention consiste ainsi à ajouter à un dispositif de déviation de la LV destiné à la fonction de désignation et/ou d'illumination de cible, un autre dispositif de déviation de la LV afin d'assurer en outre une fonction de reconnaissance aérienne.

Ce système permet de regrouper les deux fonctions de désignation et/ou d'illumination de cible d'une part et de reconnaissance aérienne d'autre part, par exemple dans un seul « pod » à savoir le « pod » de désignation et/ou d'illumination de cible, plus petit, moins lourd et compatible avec les évolutions de l'aéronef en cours de vol.

Un tel système est moins coûteux que les deux systèmes distincts de l'art antérieur. D'autre part il évite d'avoir recours à un deuxième aéronef et permet ainsi de gagner du temps.

Selon une caractéristique de l'invention, ce dispositif additionnel comprend un élément optique de déviation de la LV et des moyens aptes à mouvoir cet élément à la vitesse Vr.

De préférence, le système comprenant un détecteur apte à fonctionner selon une période D, et à intégrer le signal photonique correspondant au champ instantané pendant une durée I, les moyens sont aptes à mouvoir l'élément de déviation à la vitesse Vr, de manière à compenser le déplacement du système fixé à l'aéronef, sur une amplitude minimale égale au champ instantané x I/D, à une fréquence minimale de 5 Hz selon une direction latérale, de préférence perpendiculaire, ou éventuellement parallèle à la trace de l'aéronef.

Selon une caractéristique de l'invention, le système comprenant un miroir de coudage apte à assurer la fonction de désignation et/ou d'illumination de cible, ce miroir est aussi l'élément de déviation de la LV.

L'élément de déviation peut être une lame optique.

Le système comprend avantageusement une voie optique IR et/ou une voie proche Infrarouge et/ou une voie Visible.

L'invention a aussi pour objet un « Pod », ou une tourelle optronique comprenant un système tel que décrit.

Enfin, l'invention concerne un procédé de reconnaissance aérienne apte à former des images, chaque image correspondant à un champ instantané centré autour d'une ligne de visée LV, et qui comprend les étapes suivantes de :
- balayage de la LV d'un senseur équipé d'un détecteur matriciel, dans une direction déterminée pendant au moins le temps d'intégration du détecteur,
- contre balayage dans la direction opposée au moyen d'un dispositif de déviation afin de stabiliser la LV pendant l'intégration du détecteur,
caractérisé en ce qu'il comprend en outre les étapes suivantes de:
- désactivation du contre-balayage ,
- désignation et/ou illumination de cible au moyen du détecteur matriciel pendant cette étape de désactivation du contre-balayage.

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement un exemple de cible dans une scène, ainsi que le champ instantané correspondant, centré autour d'une ligne de visée LV,
- la figure 2 représente schématiquement un exemple de mode de réalisation d'un système selon l'invention,
- la figure 3 représente schématiquement le principe de mise en oeuvre d'un balayage de type panoramique,
- la figure 4 représente schématiquement les courbes de balayage de ligne de visée obtenues dans le cas d'une conjugaison entre le balayage principal et un contre balayage,
- la figure 5 illustre schématiquement 3 modes d'acquisition d'image « step and stare ».

Un pod de désignation et/ou d'illumination de cible comprend de manière classique trois sections.

Une pointe avant qui permet d'assurer les fonctions de formation d'images, de balayage, de télémétrie et d'illumination, et qui sera détaillée plus loin.

Une section centrale qui assure l'interface mécanique avec l'aéronef et qui comprend les modules fonctionnels suivants :
- une unité de commande et de contrôle (« Command and Control Unit » en anglais) associée à des cartes électroniques dédiées à des fonctions de servomécanisme. Elle génère des ordres de stabilisation et de déplacement de la ligne de visée, supervise le pod en entier, enregistre les images et les transmet via des liaisons de données ;
- des équipements électroniques dédiés à des fonctions évoluées ;
- une alimentation électrique ;
- un adaptateur électrique ;
- un module de filtrage ;
- un enregistreur à l'état solide ;
- une section de rotation (« Roll section » en anglais) qui assure la rotation de la pointe avant selon l'axe du pod et permet l'orientation de la ligne de vue du pod.

La troisième section est une unité de conditionnement de l'environnement (« Environmental Conditioning Unit » ou »ECU » en anglais) qui assure de manière autonome le contrôle de la température interne du pod en fonction des conditions de vol. Elle est motorisée de manière à maintenir les performances au sol ou durant les vols à très basse ou très haute altitude.

L'invention concerne plus spécifiquement la pointe avant qui comprend une tête orientable gyrostabilisée, un bloc optique et une enveloppe.

On considère selon l'invention, un système de désignation et/ou d'illumination d'une cible dans une scène ; il est équipé d'un (ou plusieurs) détecteur(s) matriciel(s) formant une image de la scène, chaque image correspondant à un champ instantané centré autour d'une ligne de visée LV.

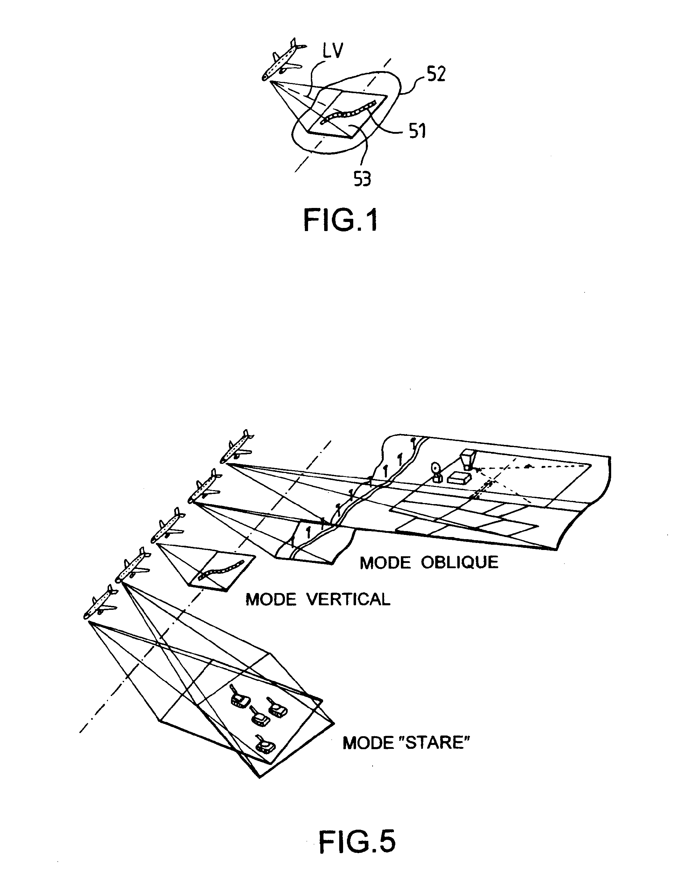

On a représenté figure 1 un exemple de cible 51 dans une scène 52, ainsi que le champ instantané 53 correspondant, centré sur une ligne de visée LV. La scène compatible d'une mission de surveillance aérienne est une scène terrestre, ou maritime, ou aérienne ou spatiale.

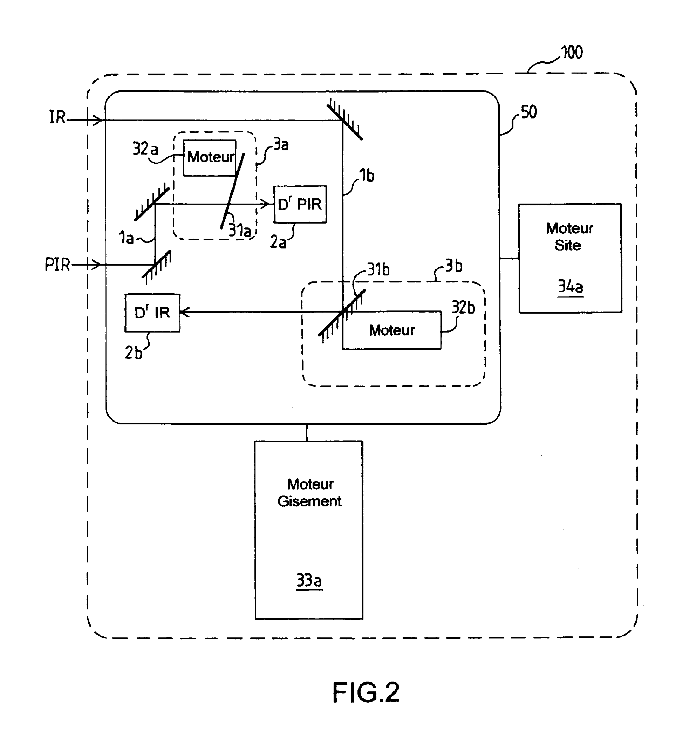

On a représenté figure 2, un mode de réalisation particulier d'un système 100 selon l'invention. Il comprend un senseur 50 à deux voies optiques: une voie proche infrarouge PIR 1a qui comporte un détecteur matriciel PIR 2a et une voie infrarouge IR 1b qui comporte un détecteur matriciel IR 2b.

La fonction de désignation et/ou d'illumination de cible est assurée sur chaque voie optique au moyen d'un dispositif de déviation de la LV à une vitesse Vd permettant de suivre la cible. Ce dispositif est réalisé par exemple à partir d'axes cardans associés au senseur 50 et motorisés en site et en gisement grâce à deux moteurs 34a et 33a.

Le système selon l'invention permet également d'assurer une fonction de reconnaissance aérienne selon un mode dit « step and stare ».

Pour assurer cette fonction, chaque voie optique du système selon l'invention comprend un dispositif additionnel de déviation de la LV à une vitesse Vr permettant d'obtenir une stabilité de la LV pendant le temps d'intégration du détecteur.

On va décrire ce mode « step and stare ».

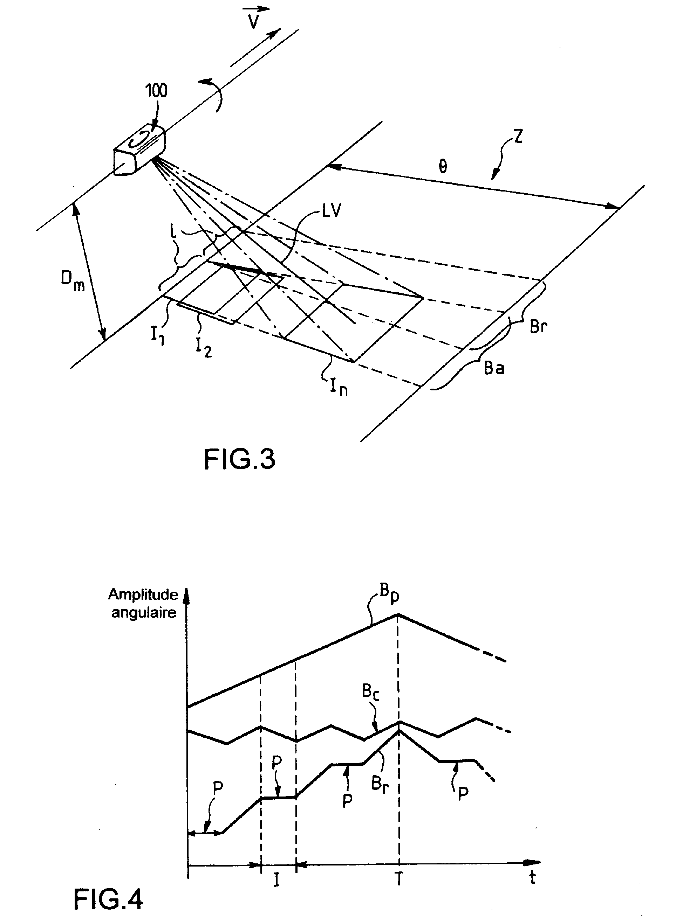

Des images successives sont réalisées à haute cadence au cours d'un balayage panoramique tel qu'illustré figure 3. On rappelle qu'en mode panoramique, l'image du détecteur matriciel est projetée au sol latéralement par rotation de la ligne de visée LV autour d'un axe V défini par le vecteur vitesse de l'aéronef. Ce balayage est effectué par oscillation du senseur 50 autour de l'axe V au moyen du moteur en site 34a, à vitesse angulaire constante et permet de balayer une zone Z au sol. On considère en particulier que l'acquisition d'images est effectuée à la fois lors de l'oscillation « aller » et lors de l'oscillation « retour » ; on parle ainsi de balayage aller et de balayage retour.

En outre, un balayage compensateur ou contre balayage est utilisé pour permettre d'obtenir une stabilité du balayage global pendant les temps d'intégration.

La figure 4 indique les courbes d'amplitude angulaire en fonction du temps t, du balayage principal Bp de la ligne de visée de demi-période T, d'un balayage compensateur Bc, et du balayage Br résultant de la composition des deux balayages précédents. Le balayage compensateur Bc est, dans cet exemple de réalisation, de type en dents de scie. Il présente un front descendant de pente et de durée telles que les paliers P qui apparaissent sur le balayage résultant Br, par composition des balayages pendant leur phase opposée, correspondent au temps d'intégration I du détecteur. Lors du retour de balayage principal, les pentes des courbes Bp et Br sont inversées. Les durées des fronts montant et descendant du balayage compensateur peuvent être adaptées en fonction de la durée d'intégration du détecteur matriciel. Après chaque acquisition d'image, c'est-à-dire après le balayage compensateur, le dispositif additionnel de déviation de la LV regagne rapidement sa position initiale afin d'acquérir l'image suivante, les différentes images présentant un recouvrement entre elles.

Le dispositif additionnel de déviation de la LV comprend un élément optique de déviation de la LV et des moyens aptes à mouvoir cet élément de manière rapide tels qu'un ou plusieurs moteurs.

Dans l'exemple de la figure 2, l'élément optique 31a de la voie PIR est une lame optique reliée à un moteur 32a. Son coefficient de réflexion est par exemple de l'ordre de 1% et son coefficient de transmission de l'ordre de 99%. L'élément optique 31b de la voie IR est un miroir mobile ; il est aussi utilisé en tant que miroir de coudage de la voie optique, dans le cadre de la fonction de désignation et/ou d'illumination de cible. Il est relié à un moteur 32b.

Le moteur 32a respectivement 32b est apte à mouvoir l'élément optique 31a respectivement 31 b à une vitesse Vr au moins k fois supérieure à Vd, avec k≥1.5. En effet, la déviation de la LV dans le cas de la reconnaissance aérienne selon ce mode « step and stare » doit être en général beaucoup plus rapide que dans le cas d'un suivi de cible.

On va à présent définir plus précisément la vitesse Vr. Un détecteur matriciel fonctionne de manière cyclique. Un cycle comporte une phase d'intégration du signal photonique correspondant au champ instantané qui transforme les photons en électrons, et une phase de lecture des électrons. I est le temps d'intégration du détecteur, L le temps de lecture et D la période de fonctionnement du détecteur (D= I+L).

La vitesse Vr est déterminée de manière à compenser le déplacement du système fixé à l'aéronef, sur une amplitude minimale égale au champ instantané x I/D, à une fréquence minimale de 5 Hz selon une direction latérale, de préférence perpendiculaire ou éventuellement parallèle à l'axe V. Les éléments optiques 31 a et 31 b sont donc orientables selon une première direction pour compenser le déplacement du système dans la direction système-scène et éventuellement selon une autre direction pour compenser l'avancement du système dans la direction V.

Un pod est généralement équipé d'une structure orientable en gisement permettant de compenser l'avancée parallèle à l'axe V. Selon un mode de réalisation particulier, l'orientation selon la direction perpendiculaire à la direction système-scène est assurée par cette structure : cela permet ainsi de réaliser un balayage commun aux deux voies IR et PIR.

Le dispositif additionnel de déviation de la LV comprend également de manière classique un élément de mesure de la position de l'élément optique, en l'occurrence le miroir ou la lame. Cet élément de mesure comprend un émetteur par exemple une diode laser, et un récepteur.

On distingue 3 modes « step and stare » différents respectivement illustrés figure 5 :
- un mode « vertical » utilisé pour couvrir une zone qui s'étend le long d'une ligne autour d'un axe V défini par le vecteur vitesse de l'aéronef,
- un mode « oblique » utilisé pour couvrir une zone prédéfinie, le balayage de cette zone étant obtenu sous forme de bandeaux,
- un mode dit « stare » utilisé pour permettre une analyse détaillée de cibles spécifiques à grande distance.

Ces trois modes peuvent être enchaînés au cours d'un même vol.

Lorsque le système selon l'invention est installé à bord d'un pod, il permet d'assurer les deux fonctions de reconnaissance aérienne et de désignation et/ou d'illumination de cible. Ces deux fonctions ne sont pas réalisées en même temps, mais successivement.

Pour assurer la fonction de désignation et/ou d'illumination de cible, il est nécessaire que soit désactivée la fonction de contre balayage de la LV qui n'est utilisée que pour la reconnaissance aérienne : dans l'exemple de la figure 2, cette désactivation signifie que le miroir 31 b et la lame optique 31 a sont bloqués.

Le système selon l'invention peut être installé à bord d'un pod ou encore dans une tourelle optronique destinée à être fixée à un drone ou un hélicoptère.

## Revendications

1. Système (100) de désignation et/ou d'illumination d'une cible dans une scène, qui est destiné à être fixé à un aéronef et apte à être orienté dans un champ supérieur au demi-espace avant de l'aéronef et comprend au moins un laser de télémétrie et/ou désignation et/ou d'illumination de la cible et au moins une voie optique (1) équipée d'un détecteur (2) matriciel formant une image de la scène, chaque image correspondant à un champ instantané centré autour d'une ligne de visée LV, et équipée d'un dispositif de déviation de la LV à une vitesse déterminée Vd permettant d'effectuer un balayage pour assurer la fonction de désignation et d'illumination de cible, **caractérisé en ce qu'**il comporte un dispositif additionnel (3) de déviation de la LV à une vitesse Vr permettant d'effectuer un contre balayage, pour assurer en outre une fonction de reconnaissance aérienne.

2. Système selon la revendication précédente, **caractérisé en ce que** ce dispositif additionnel (3) comprend un élément optique (31) de déviation de la LV et des moyens (32) aptes à mouvoir cet élément à la vitesse Vr.

3. Système selon la revendication précédente comprenant un détecteur (2) apte à fonctionner selon une période D, et à intégrer le signal photonique correspondant au champ instantané pendant une durée I, **caractérisé en ce que** les moyens (32) sont aptes à mouvoir l'élément (31) de déviation à la vitesse Vr, de manière à compenser le déplacement du système fixé à l'aéronef, sur une amplitude minimale égale au champ instantané x I/D, à une fréquence minimale de 5 Hz selon une direction latérale ou éventuellement parallèle à la trace de l'aéronef.

4. Système selon la revendication précédente, **caractérisé en ce que** la direction latérale est perpendiculaire à la trace de l'aéronef.

5. Système selon l'une quelconque des revendications précédentes, **caractérisé en ce que** le système comprenant un miroir de coudage apte à assurer la fonction de désignation de cible, ce miroir (31 b) est aussi l'élément optique de déviation (31) de la LV.

6. Système selon l'une quelconque des revendications 2 à 4, **caractérisé en ce que** l'élément optique de déviation (31) est une lame optique (31 a).

7. Système selon l'une quelconque des revendications précédentes, **caractérisé en ce que** la scène est terrestre, ou maritime, ou aérienne ou spatiale.

8. Système selon l'une quelconque des revendications précédentes, **caractérisé en ce qu'**il comprend une voie optique IR (1 b) et/ou une voie Proche Infrarouge (1 a) et/ou une voie Visible.

9. Nacelle, **caractérisée en ce qu'**elle comprend un système selon l'une quelconque des revendications précédentes.

10. Tourelle optronique, **caractérisée en ce qu'**elle comprend un système selon l'une quelconque des revendications 1 à 8.

11. Procédé de reconnaissance aérienne apte à former des images, chaque image correspondant à un champ instantané centré autour d'une ligne de visée LV, et qui comprend les étapes suivantes de :
- balayage de la LV d'un senseur équipé d'un détecteur matriciel, dans une direction déterminée pendant au moins le temps d'intégration du détecteur,
- contre balayage dans la direction opposée au moyen d'un dispositif de déviation afin de stabiliser la LV pendant l'intégration du détecteur,
**caractérisé en ce qu'**il comprend en outre les étapes suivantes de :
- désactivation du contre-balayage ,
- désignation et/ou illumination de cible au moyen du détecteur matriciel pendant cette étape de désactivation du contre-balayage.

## Patentansprüche

1. System (100) zum Bestimmen und/oder Beleuchten eines Ziels in einer Szene, das zum Montieren an einem Luftfahrzeug bestimmt ist und in einem oberen Feld im vorderen Halbraum des Luftfahrzeugs orientiert werden kann und wenigstens einen Laser für Telemetrie und/oder Bestimmung und/oder Beleuchtung des Ziels und wenigstens eine Optik (1) umfasst, die mit einem Matrixdetektor (2) ausgestattet ist, der ein Bild der Szene bildet, wobei jedes Bild einem Momentanfeld entspricht, das um eine Visierlinie LV zentriert ist, und mit einer Ablenkvorrichtung von der LV mit einer bestimmten Geschwindigkeit Vd ausgestattet ist, mit der eine Abtastung durchgeführt werden kann, um die Zielbestimmungs- und -beleuchtungsfunktion zu gewährleisten, **dadurch gekennzeichnet, dass** es eine Zusatzvorrichtung (3) zum Ablenken von der LV mit einer Geschwindigkeit Vr umfasst, mit der eine Gegenabtastung durchgeführt werden kann, um darüber hinaus eine Luftaufklärungsfunktion sicherzustellen.

2. System nach dem vorherigen Anspruch, **dadurch gekennzeichnet, dass** die Zusatzvorrichtung (3) ein optisches Element (31) zum Ablenken von der LV und Mittel (32) zum Bewegen dieses Elements mit der Geschwindigkeit Vr umfasst.

3. System nach dem vorherigen Anspruch, das einen Detektor (2) umfasst, der gemäß einer Periode D funktionieren und das Photonsignal integrieren kann, das dem Momentanfeld während einer Dauer I entspricht, **dadurch gekennzeichnet, dass** die Mittel (32) das Ablenkelement (31) mit der Geschwindigkeit Vr bewegen können, um die Verschiebung des am Luftfahrzeug montierten Systems auf einer minimalen Amplitude von gleich dem Momentanfeld x I/D mit einer minimalen Frequenz von 5 Hz gemäß einer lateralen oder eventuell parallelen Richtung zur Bahn des Luftfahrzeugs zu kompensieren.

4. System nach dem vorherigen Anspruch, **dadurch gekennzeichnet, dass** die laterale Richtung lotrecht zur Bahn des Luftfahrzeugs ist.

5. System nach einem der vorherigen Ansprüche, **dadurch gekennzeichnet, dass** das System einen Krümmungsspiegel zum Gewährleisten der Zielbestimmungsfunktion umfasst, wobei dieser Spiegel (31b) auch das optische Element (31) zum Ablenken von der LV ist.

6. System nach einem der Ansprüche 2 bis 4, **dadurch gekennzeichnet, dass** das optische Ablenkelement (31) eine optische Platte (31a) ist.

7. System nach einem der vorherigen Ansprüche, **dadurch gekennzeichnet, dass** die Szene eine terrestrische oder Meeres- oder Luft- oder Raumszene ist.

8. System nach einem der vorherigen Ansprüche, **dadurch gekennzeichnet, dass** es einen optischen IR-Kanal (1b) und/oder einen Nahe-Infrarot-Kanal (1a) und/oder einen sichtbaren Kanal umfasst.

9. Gondel, **dadurch gekennzeichnet, dass** sie ein System nach einem der vorherigen Ansprüche umfasst.

10. Optronischer Drehturm, **dadurch gekennzeichnet, dass** er ein System nach einem der Ansprüche 1 bis 8 umfasst.

11. Luftaufklärungsverfahren zum Bilden von Bildern, wobei jedes Bild einem Momentanfeld entspricht, das um eine Visierlinie LV herum zentriert ist, und das die folgenden Schritte beinhaltet:
- Abtasten der LV mit einem mit einem Matrixdetektor ausgestatteten Sensor in einer bestimmten Richtung mindestens während der Integrationszeit des Detektors,
- Gegenabtasten in der entgegengesetzten Richtung mittels einer Ablenkvorrichtung, um die LV während der Integration des Detektors zu stabilisieren,
**dadurch gekennzeichnet, dass** es darüber hinaus die folgenden Schritte beinhaltet:
- Deaktivieren der Gegenabtastung,
- Bestimmen und/oder Beleuchten des Ziels mit Hilfe des Matrixdetektors während dieses Schrittes des Deaktivierens der Gegenabtastung.

## Claims

1. A system (100) for target designation and/or illumination in a scene, which is designed to be fastened to an aircraft and capable of being oriented in an upper field in the front half-space of the aircraft and comprises at least one telemetry and/or target designation and/or illumination laser and at least one optic channel (1) equipped with a matrix detector (2) forming an image of the scene, each image corresponding to an instantaneous field centered around a line of sight LV, and equipped with a LV deflecting device at a predetermined speed Vd making it possible to perform scanning to perform the target designation and illumination function, **characterized in that** it includes an additional LV deflecting device (3) at a speed Vr making it possible to perform counter-scanning, to further perform an aerial reconnaissance function.

2. The system according to the preceding claim, **characterized in that** said additional device (3) comprises an optic LV deflecting element (31) and means (32) capable of moving that element at the speed Vr.

3. The system according to the preceding claim, comprising a detector (2) capable of working according to a period D, and integrating the photonic signal corresponding to the instantaneous field for a duration I, **characterized in that** the means (32) can move the deflecting element (31) at the speed Vr, so as to compensate the movement of the system fastened to the aircraft, over a minimum amplitude equal to the instantaneous field x I/D, at a minimum frequency of 5 Hz in a lateral direction or possibly a direction parallel to the plot of the aircraft.

4. The system according to the preceding claim, **characterized in that** the lateral direction is perpendicular to the plot of the aircraft.

5. The system according to any one of the preceding claims, **characterized in that** the system comprises a bending mirror capable of performing the target designation function, this mirror (31b) is also the optical LV deflecting element (31).

6. The system according to any one of claims 2 to 4, **characterized in that** the optical deflecting element (31) is an optical blade (31a).

7. The system according to any one of the preceding claims, **characterized in that** the scene is land-based, or sea-based, or aerial or spatial.

8. The system according to any one of the preceding claims, **characterized in that** it comprises an IR optical channel (1b) and/or a Near Infrared channel (1a) and/or a Visible channel.

9. A nacelle, **characterized in that** it comprises a system according to any one of the preceding claims.

10. An optoelectronic turret, **characterized in that** it comprises a system according to any one of claims 1 to 8.

11. An aerial reconnaissance method able to form images, each image corresponding to an instantaneous field centered around a line of sight LV, and which comprises the following steps:
- scanning the LV using a sensor equipped with a matrix detector, in a predetermined direction during at least the integration time of the detector,
- counter-scanning in the opposite direction using a deflecting device so as to stabilize the LV during the integration of the detector,
**characterized in that** it further comprises the following steps:
- deactivating the counter-scanning,
- target designation and/or illumination using the matrix detector during said step for deactivating the counter-scanning.
